# EUROPÄISCHE PATENTANMELDUNG

(11) **EP 1 498 175 A1**
(43) Veröffentlichungstag der Anmeldung: **19.01.2005**
(21) Anmeldenummer: 04102181.7
(22) Anmeldetag: 18.05.2004
(51) Int. Cl.: B01J 19/20, B01F 7/24

(54) **Vorrichtung und Verfahren zur diskontinuierlichen Polykondensation**

(30) Priorität: 15.07.2003 DE 10331952
(71) Anmelder: Degussa AG, 40474 Düsseldorf (DE)
(72) Erfinder: Müller, Bernd, Dr., 45768, Marl (DE); Pöpken, Tim, Dr., 26169 Friesoythe (DE); Hirsch, Rolf, Dr., 45770 Marl (DE); Trost, Edgar, 45721 Haltern am See (DE); Becker, Georg, 58455 Witten (DE); Bartmann, Martin, Dr., 45657 Recklinghausen (DE); Zagefka, Hans-Dieter, Dr., 45721 Haltern am See (DE)

(57) **Zusammenfassung**

Die Erfindung bezieht sich auf eine Vorrichtung und ein Verfahren zur diskontinuierlichen Herstellung von Polykondensationspolymeren mit einer intrinsischen Viskosität von 50 bis 150 cm³/g bei der jeweiligen Polykondensationstemperatur. Die Polykondensationsreaktion wird in einem konischen, mantelbeheizten Behälter (4), mit einem Wendel- oder Doppelwendelrührer (6) welcher zuzätzlich beheizbar sein kann, durchgeführt, wobei der Öffnungswinkel (α) des Konuses 20° bis 120° beträgt.

## Beschreibung

Die Erfindung bezieht sich auf eine Vorrichtung und ein Verfahren zur diskontinuierlichen Herstellung von Polykondensationspolymeren mit einer dynamischen Viskosität von 10 bis 750 Pa·s bei der jeweiligen Polykondensationstemperatur. Diese werden aus vorab in einem beliebigen Rührreaktor hergestellten niedermolekularen Oligomeren durch Kondensation in einem vertikalen, konischen, mit Heiz-/Kühlmantel versehenen Reaktionsgefäß, ausgestattet mit einer für hohe Viskositäten geeigneten Rührvorrichtung, z.B. einer einfachen oder einer doppelten Wendel, welche zusätzlich beheizbar sein kann, erhalten.

### Stand der Technik

Reaktoren und Prozesse zur diskontinuierlichen (d.h. chargenweisen) Herstellung von Kondensationspolymeren, etwa Polyestern, in der Schmelze, sowie die nach Beendigung der Polykondensation erfolgende Granulierung sind hinreichend bekannt. Eine diskontinuierliche Fahrweise ist besonders dann vorteilhaft, wenn die Produktzusammensetzung häufig geändert wird und der Wechsel zwischen Produkten verschiedener Zusammensetzung schnell und möglichst verlustfrei erfolgen muss. Die für die kontinuierliche Kondensationspolymerisation entwickelten Apparate, wie sie z.B. in der DE-OS 197 06 901 A1 aufgezählt werden, sind für den diskontinuierlichen Betrieb im allgemeinen ungeeignet, da sie über ein unzureichendes Behältervolumen und eine schlechte Restentleerbarkeit verfügen. Außerdem sind diese Reaktoren auf einen bestimmten Viskositätsgradienten optimiert, welcher bei der Produktion eines bestimmten Polyesters auftritt. Am Beispiel von gemischten Polyestern wird ein übliches diskontinuierliches Verfahren zur Kondensationspolymerisation dargestellt.

Gemischte Polyester, bestehend aus ein oder mehreren aliphatischen oder aromatischen Diolkomponenten und ein oder mehreren aliphatischen oder aromatischen Dicarbonsäurekomponenten eines hohen mittleren Molekulargewichtes werden üblicherweise in mindestens zwei Reaktionsschritten hergestellt. Im ersten Reaktionsschritt erfolgt unter Diolüberschuss die Herstellung eines niedermolekularen Zwischenproduktes, welches in einem zweiten, Endkondensationsschritt von überschüssigem Diol befreit wird und dabei zu hohen Molekulargewichten weiterreagiert. Weitere Nachkondensationsschritte, auch in der festen Phase, können nötigenfalls folgen.

Während der erste Reaktionsschritt in üblichen Rührkesselreaktoren durchgeführt werden kann, erfordert die im Verlauf der Endkondensation zunehmende Viskosität und die nötige, weitgehende Entfernung des Überschusses der teilweise hochsiedenden Diolkomponenten den Einsatz spezieller Reaktoren. Neben der Gewährleistung eines sehr guten Vakuums im Bereich < 1 bis 3 mbar muss eine ausreichende Durchmischung der Schmelze sowie eine effektive Zerstörung eines die Verdampfung behindernden Schaums auf der Schmelzeoberfläche sichergestellt sein. Schäume können zwischenzeitlich bei mittleren Viskositäten während der Polykondensationsreaktion auftreten. Weiterhin ist eine gute Temperaturkontrolle des Prozesses zu gewährleisten, da in der Anfangsphase der Kondensationspolymerisation Wärme in die Schmelze eingebracht werden muss, um die Verdampfung überschüssigen Diols zu ermöglichen. In den späteren Phasen der Polykondensationsreaktion wird durch das Rührorgan Wärme in die hochviskose Schmelze mechanisch eingetragen, die effektiv entfernt werden muss, um eine lokale Überhitzung zu vermeiden, die mit Qualitätsverminderungen im Produkt einhergeht. Die durch die Kühlung an der Wand viskoser werdende Polymerschmelze muss zudem durch einen wandgängigen Rührer entfernt werden, um einen guten Wärmeübergang sicherzustellen.

Für die chargenweise Produktion von hochmolekularen und daher hochviskosen Polyestern wurden einige spezielle Reaktoren entwickelt. Zu nennen sind hier konventionelle Rührkessel mit speziellen, für hohe Viskositäten geeigneten Rührern (vgl. z.B. US 4,022,438 oder US-6,149,296), die die entsprechende Durchmischung sicherstellen; Ringscheibenreaktoren, die zur Verbesserung der Verdampfung Filme aus der Schmelze ziehen (DE-OS-100 01 477 A1) oder selbstreinigende Kneter (z.B. US 5 934 801 und 5121 992), die eine besonders gute Abreinigung der Wände und der Einbauten gewährleisten.

Konventionelle Rührkessel haben den Nachteil eines ungünstigen Oberfläche/Volumen Verhältnisses, was lange Reaktionszeiten verursacht. Die Folge von langen Reaktionszeiten ist eine Qualitätsverminderung des Endproduktes, hervorgerufen durch lange Verweilzeiten bei hoher Temperatur und gekennzeichnet durch eine Zunahme des Säuregehaltes und/oder eine Abnahme der Schmelztemperatur. Dies wurde z.B. durch Schrägstellen eines solchen Reaktors zu verbessern versucht (EP 0 753 344 A2). Dieses bringt allerdings schwerwiegende Nachteile durch eine komplizierte Mechanik und Unsicherheiten bei der Beherrschung von Querkräften und Unwuchten mit sich.

Ringscheibenreaktoren und selbstreinigende Kneter haben den Nachteil hoher spezifischer Apparatekosten. Für den kommerziell interessanten Bereich von intrinsischen Viskositäten zwischen 50 und 150 cm³/g, wie sie z.B. im Schmelzklebesektor erforderlich sind, stehen dem Einsatz dieser Reaktoren die zu hohen Apparatekosten entgegen. Außerdem nachteilig ist das Unvermögen dieser Apparate, während der Kondensationspolymerisation teilweise auftretende Schäume effektiv zu zerstören, wodurch ihre Wirksamkeit bei der Verdampfung phasenweise herabgesetzt ist. Die Kombination dieser Merkmale macht diese beiden Reaktortypen nur für sehr hochviskose Kondensationspolymere interessant. Bei diesen sehr hohen Viskositäten ist allerdings wiederum die nahezu vollständige Restentleerung, wie sie für ein qualitativ hochwertiges Produkt, gekennzeichnet durch eine niedrige Säurezahl und lange Lagerstabilität erforderlich ist, problematisch.

### Aufgabe der Erfindung

Aufgabe der Erfindung ist es, einen Reaktor für die Endkondensation von gemischten Polyestern in einem Bereich intrinsischer Viskositäten von 50 bis 150 cm³/g zu finden, der den oben angegebenen Ansprüchen genügt, also neben einer guten Restentleerbarkeit eine gute Durchmischung und Schaumzerstörung und damit einen schnellen Reaktionsverlauf bei der Endkondensation von gemischten Polyestern gewährleistet. Dabei sollen die ebenfalls oben beschriebenen Nachteile vermieden werden. Durch eine Vorrichtung und ein Verfahren gemäß den Ansprüchen konnten die Nachteile des Standes der Technik überwunden werden.

Es wurde nun gefunden, dass bei der diskontinuierlichen Herstellung von Kondensationspolymeren aus einem oligomeren Vorprodukt unter Abspaltung und Verdampfung niedermolekularer Kondensationsprodukte eine Vorrichtung geeignet ist, die von konischer Gestalt ist, mantelbeheizt, mit einem Wendel- oder Doppelwendelrührer, welcher zusätzlich beheizt sein kann, ausgestattet ist, wobei der Öffnungswinkel (α) des Konus 20 bis 120°, vorzugsweise 30 bis 60° beträgt.

Der Wendel- oder Doppelwendelrührer verfügt dabei über eine Steigung (Winkel zur Horizontalen) zwischen 12 und 75°, vorzugsweise zwischen 15 und 45°.

Statt des Wendel- oder Doppelwendelrührers kann ein dem Behälterquerschnitt angepasster (V-förmiger) Ankerrührer verwendet werden, der mit zusätzlichen Leitblechen ausgestattet sein kann, welche eine Förderung in axialer Richtung bewirken.

Der obere, ebenfalls mit einem Temperiermantel ausgestattete Bereich des Behälters kann zylindrisch ausgeführt sein und der zylindrische Abschnitt (h_{z}) eine Höhe aufweisen, die der 0 bis 1,6-fachen, vorzugsweise 0 bis 0,8-fachen, Höhe des konischen Abschnittes (hₖ) entspricht.

Der Rührer kann derart angetrieben sein, dass er in Stufen oder stufenlos in der Drehzahl verändert und auch zur Entleerung des Apparates entgegen dem ursprünglichen Drehsinn bewegt werden kann.

Die vertikale Position des Rührwerks kann variiert werden, um den Wandabstand des Rührers zwischen 3 und 25 mm, vorzugsweise 4 und 15 mm, einzustellen.

Überraschend wurde gefunden, dass dieser für Trocknungs- und Mischaufgaben von Feststoffen konzipierte Apparat für die Aufgabe der Erfmdung geeignet ist. Der im wesentlichen konische Reaktor gewährleistet eine sehr gute Restentleerbarkeit, wie sie für häufige Produktwechsel im diskontinuierlichen Betrieb unbedingt erforderlich ist.

Während der Anfangsphase der Polykondensationsreaktion kann bei schnell laufendem Rührer unter Ausbildung einer leichten Trombe zum einen die zur Verdampfung zur Verfügung stehende Oberfläche dadurch vergrößert werden, dass der Rührmechanismus die Schmelze über die gesamte Innenfläche des Apparates verteilt und diesen Film oft erneuert. Zum anderen wird der sich auf der Schmelze ausbildende Schaum durch die schnelle Rührbewegung und die auftretenden Zentrifugalkräfte, sowie Scherkräfte zwischen Innenwand des Apparates und Rührer effektiv zerstört. Mit ansteigender Viskosität kann die Rührerdrehzahl vermindert werden, da die Schaumbildung abnimmt. Dies hält den Leistungsbedarf für den Rührmotor in einem vertretbaren Rahmen und vermindert gleichzeitig den übermäßigen Eintrag von mechanischer Energie in die Schmelze, die trotz geregelter Temperaturführung des Reaktors zu Überhitzungen führen könnte.

Es wurde nun überraschend gefunden, dass dieser konische, für Trocknungs- und Mischaufgaben konzipierte Apparat beim Einsatz als Polykondensationsreaktor sowohl einem horizontalen Einwellenkneter (vgl. Beispiel 2), als auch einem derzeit eingesetzten konventionellen Rührautoklaven in punkto Reaktionszeit und Produktqualität deutlich überlegen ist, wie in den folgenden Beispielen dargestellt.

### Beispiel 1

In einem Vertikalmischer wurden 80kg eines Vorproduktes, welches durch die Umsetzung von 38,5 kg 1,4-Butandiol, 21,9 kg Adipinsäure und 37,3 kg Dimethylterephthalat unter Abspaltung entsprechender Mengen Methanol und Wasser bei Atmosphärendruck und 190 °C Reaktionstemperatur hergestellt wurde, eingefüllt und auf die Polykondensationstemperatur von ca. 240 °C gebracht. Nach Zusatz von 20 ppm Ti als Katalysator (als Tetrabutylorthotitanat, bezogen auf die Gesamtmasse) wurde der Druck im Reaktor auf 2 mbar reduziert und 1,4-Butandiol abdestilliert. Die Drehzahl des Rührers wurde nach und nach von anfangs 135 min⁻¹ auf 70 min⁻¹ am Ende des Versuches reduziert. Es konnte keine nennenswerte Schaumschicht auf der Schmelze beobachtet werden. Nach 3,5 h Reaktionszeit wurde ein spezifikationsgerechtes Polykondensationsprodukt mit einer Säurezahl von 0,47 mg KOH·g⁻¹ und einer intrinsischen Viskosität von 100 cm³·g⁻¹ erhalten.

### Beispiel 2 (Vergleichsbeispiel)

In einem horizontalen Einwellenkneter der Firma List AG, Arisdorf bekannt z.B. aus US-5,121,922 und US-5,934,801, wurden 80 kg des gleichen Vorproduktes, wie in Beispiel 1 angeführt, eingefüllt und auf die Polykondensationstemperatur von ca. 240 °C gebracht. Nach Zusatz von 20 ppm Ti als Katalysator wurde der Druck im Reaktor auf 2 mbar reduziert und 1,4-Butandiol abdestilliert. Die Drehzahl betrug 50·min⁻¹. Während der Polykondensation trat ein ausgeprägter Schaumteppich auf der Schmelzeoberfläche auf. Nach 5 h Reaktionszeit wurde ein Produkt mit einer Säurezahl von 0,40 mg KOH·g⁻¹ und einer intrinsischen Viskosität von 77 cm³·g⁻¹ erhalten. Dieses Produkt entspricht nicht den Spezifikationen, da der gewünschte Polykondensationsgrad nicht innerhalb einer akzeptablen Reaktionszeit erreicht werden konnte.

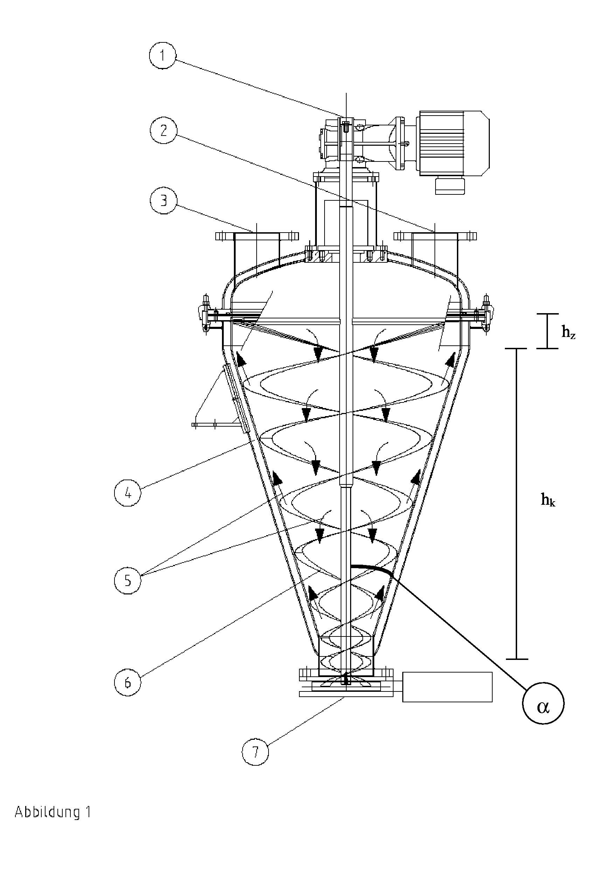

In der Abbildung 1 ist eine Ausführungsform des Apparates dargestellt. Ein Getriebemotor (1) treibt das Doppelwendel-Mischwerk (6) an, wobei die Drehzahl regelbar ist. Das Vorprodukt wird über den Füllstutzen (2) in den Apparat gebracht. Die flüchtigen Kondensationsprodukte verlassen den Apparat über den Brüdenstutzen (3). Der Apparat ist über einen Doppelmantel (4) temperiert. Die Fließrichtung des Produktes ist mit Pfeilen (5) angedeutet. Am Rand wird die Reaktionsmasse durch das Rührwerk (6) aufwärts bewegt und fließt in der Mitte nahe der Antriebswelle nach unten zurück. Nach dem Ende der Polykondensation wird das Produkt durch ein Austragsorgan (7) abgelassen, wobei das Rührwerk (6) unterstützend in umgekehrtem Drehsinn arbeitend eingesetzt werden kann, sodass das Polykondensat an der Reaktorwandung nach unten gefördert wird.

## Patentansprüche

1. Vorrichtung zur diskontinuierlichen Herstellung von Kondensationspolymeren aus einem oligomeren Vorprodukt unter Abspaltung und Verdampfung niedermolekularer Kondensationsprodukte,
**dadurch gekennzeichnet,**
**dass** die Polykondensationsreaktion in einem konischen, mantelbeheizten Behälter, mit einem Wendel- oder Doppelwendelrührer, welcher zusätzlich beheizbar sein kann, durchgeführt wird, wobei der Öffnungswinkel des Konus 20 bis 120° beträgt.

2. Vorrichtung nach Anspruch 1,
**dadurch gekennzeichnet,**
**dass** die Polykondensationsreaktion in einem konischen, mantelbeheizten Behälter, mit einem Wendel- oder Doppelwendelrührer, welcher zusätzlich beheizbar sein kann, durchgeführt wird, wobei der Öffnungswinkel des Konus 30 bis 60° beträgt.

3. Vorrichtung nach Anspruch 1, wobei der Wendel- oder Doppelwendelrührer über eine Steigung (Winkel zur Horizontalen) zwischen 12 und 75° verfügt.

4. Vorrichtung nach Anspruch 1, wobei der Wendel- oder Doppelwendelrührer über eine Steigung (Winkel zur Horizontalen) zwischen 15 und 45° verfügt.

5. Vorrichtung nach Anspruch 1, wobei statt des Wendel- oder Doppelwendelrührers ein dem Behälterquerschnitt angepasster (V-förmiger) Ankerrührer verwendet wird, der mit zusätzlichen Leitblechen ausgestattet sein kann, welche eine Förderung in axialer Richtung bewirken.

6. Vorrichtung nach den Ansprüchen 1 bis 5, wobei der obere, ebenfalls mit einem Temperiermantel ausgestattete Bereich des Behälters zylindrisch ausgeführt ist und der zylindrische Abschnitt eine Höhe aufweist, die der 0 bis 1,6-fachen Höhe des konischen Abschnittes entspricht.

7. Vorrichtung nach den Ansprüchen 1 bis 5, wobei der obere, ebenfalls mit einem Temperiermantel ausgestattete Bereich des Behälters zylindrisch ausgeführt ist und der zylindrische Abschnitt eine Höhe aufweist, die der 0 bis 0,8-fachen Höhe des konischen Abschnittes entspricht.

8. Vorrichtung nach den Ansprüchen 1 bis 7, wobei der Rührer derart angetrieben ist, dass er in Stufen oder stufenlos in der Drehzahl verändert und auch zur Entleerung des Apparates entgegen dem ursprünglichen Drehsinn bewegt werden kann.

9. Vorrichtung nach den Ansprüchen 1 bis 8, wobei die vertikale Position des Rührwerks variiert werden kann, um den Wandabstand des Rührers zwischen 3 und 25 mm einzustellen.

10. Vorrichtung nach den Ansprüchen 1 bis 8, wobei die vertikale Position des Rührwerks variiert werden kann, um den Wandabstand des Rührers zwischen 4 und 15 mm einzustellen.

11. Verfahren zur diskontinuierlichen Herstellung von Kondensationspolymeren aus einem oligomeren Vorprodukt unter Abspaltung und Verdampfung niedermolekularer Kondensationsprodukte **dadurch gekennzeichnet, dass** die Polykondensationsreaktion in einem konischen, mantelbeheizten Behälter, mit einem Wendel- oder Doppelwendelrührer, welcher zusätzlich beheizbar sein kann, durchgeführt wird, wobei der Öffnungswinkel des Konus 20 bis 120° beträgt.

12. Verfahren nach Anspruch 11,
**dadurch gekennzeichnet,**
**dass** die Polykondensationsreaktion in einem konischen, mantelbeheizten Behälter, mit einem Wendel- oder Doppelwendelrührer, welcher zusätzlich beheizbar sein kann, durchgeführt wird, wobei der Öffnungswinkel des Konus 30 bis 60° beträgt.

13. Verfahren nach Anspruch 11, wobei der Wendel- oder Doppelwendelrührer über eine Steigung (Winkel zur Horizontalen) zwischen 12 und 75° verfügt.

14. Verfahren nach Anspruch 11, wobei der Wendel- oder Doppelwendelrührer über eine Steigung (Winkel zur Horizontalen) zwischen 15 und 45° verfügt.

15. Verfahren nach Anspruch 11, wobei statt des Wendel- oder Doppelwendelrührers ein dem Behälterquerschnitt angepasster (V-förmiger) Ankerrührer verwendet wird, der mit zusätzlichen Leitblechen ausgestattet sein kann, welche eine Förderung in axialer Richtung bewirken.

16. Verfahren nach den Ansprüchen 11 bis 15, wobei der obere, ebenfalls mit einem Temperiermantel ausgestattete Bereich des Behälters zylindrisch ausgeführt ist und der zylindrische Abschnitt eine Höhe aufweist, die der 0 bis 1,6-fachen Höhe des konischen Abschnittes entspricht.

17. Verfahren nach den Ansprüchen 11 bis 15, wobei der obere, ebenfalls mit einem Temperiermantel ausgestattete Bereich des Behälters zylindrisch ausgeführt ist und der zylindrische Abschnitt eine Höhe aufweist, die der 0 bis 0,8-fachen Höhe des konischen Abschnittes entspricht.

18. Verfahren nach den Ansprüchen 11 bis 17, wobei der Rührer derart angetrieben ist, dass er in Stufen oder stufenlos in der Drehzahl verändert und auch zur Entleerung des Apparates entgegen dem ursprünglichen Drehsinn bewegt werden kann.

19. Verfahren nach den Ansprüchen 11 bis 18, wobei die vertikale Position des Rührwerks variiert werden kann, um den Wandabstand des Rührers zwischen 3 und 25 mm einzustellen.

20. Verfahren nach den Ansprüchen 11 bis 18, wobei die vertikale Position des Rührwerks variiert werden kann, um den Wandabstand des Rührers zwischen 4 und 15 mm einzustellen.
